# EUROPEAN PATENT APPLICATION

(11) **EP 4 637 129 A1**
(43) Date of publication of application: **22.10.2025**
(21) Application number: 25164597.4
(22) Date of filing: 19.03.2025
(51) Int. Cl.: H04N 1/00

(54) **READING DEVICE AND PRINTING DEVICE**

(30) Priority: 25.03.2024 JP 2024048346
(71) Applicant: Seiko Epson Corporation, Tokyo 160-8801 (JP)
(72) Inventor: IKEYA, Taichi, Suwa-shi, Nagano, 392-8502 (JP)
(74) Representative: MERH-IP Matias Erny Reichl Hoffmann Patentanwälte PartG mbB

(57) **Abstract**

A reading device includes an image capturing element configured to capture a medium conveyed, a first roller disposed upstream of the image capturing element in a conveyance direction of the medium, and a second roller disposed downstream of the image capturing element in the conveyance direction, in which the image capturing element is disposed away from the medium and opposite to a first surface that is one surface of the medium, and the first roller and the second roller come into contact with the first surface of the medium from a side of the image capturing element to apply the medium with predetermined tension along the conveyance direction of the medium.

## Description

The present application is based on, and claims priority from JP Application Serial Number 2024-048346, filed March 25, 2024, the disclosure of which is hereby incorporated by reference herein in its entirety.

### BACKGROUND

### 1. Technical Field

The present disclosure relates to a reading device.

### 2. Related Art

JP-A-2021-169186 discloses a printing device configured to perform selective printing at roll paper or single-sheet paper and configured to be installed in a narrow space. As a printing device as in JP-A-2021-169186, there is a known printing device including an image capturing element and a reading device configured to read an image printed at a medium to be conveyed. There is a reading device provided with a transparent member such as glass between an image capturing element and a medium, and configured to convey the medium while bringing the medium into contact with the transparent member. For example, there is a reading device provided with a reflector at a side opposite to an image capturing element across a medium, and configured to convey the medium while bringing the medium into contact with the reflector.

However, in the known reading device, when another member such as a reflector or a transparent member comes into contact with the medium, friction occurs between the medium and the other member, which may become a load for conveyance of the medium.

### SUMMARY

One aspect to solve the above problem is a reading device including an image capturing element configured to capture a medium conveyed, a first roller disposed upstream of the image capturing element in a conveyance direction of the medium, and a second roller disposed downstream of the image capturing element in the conveyance direction, in which the image capturing element is disposed away from the medium and opposite to a first surface that is one surface of the medium, and the first roller and the second roller come into contact with the first surface of the medium from a side of the image capturing element to apply the medium with predetermined tension along the conveyance direction of the medium.

Another aspect to solve the above problem is a printing device including the reading device described above, a conveyance unit configured to convey the medium having an elongated shape, and a printing unit provided upstream of the reading device in a conveyance path of the medium, and configured to form an image by ejecting ink to the first surface that is one surface of the medium conveyed by the conveyance unit.

### BRIEF DESCRIPTION OF THE DRAWINGS

FIG. 1 is a view illustrating a printing device according to an embodiment of the present disclosure.
FIG. 2 is a side view of a scanner.
FIG. 3 is a perspective view of the scanner.
FIG. 4 is a bottom view of the scanner.
FIG. 5 is a plan view of the scanner.
FIG. 6 is a cross-sectional view taken along line VI-VI of FIG. 4.

### DESCRIPTION OF EMBODIMENTS

### Configuration of Printing Device

An embodiment of the present disclosure will be described below with reference to the accompanying drawings.

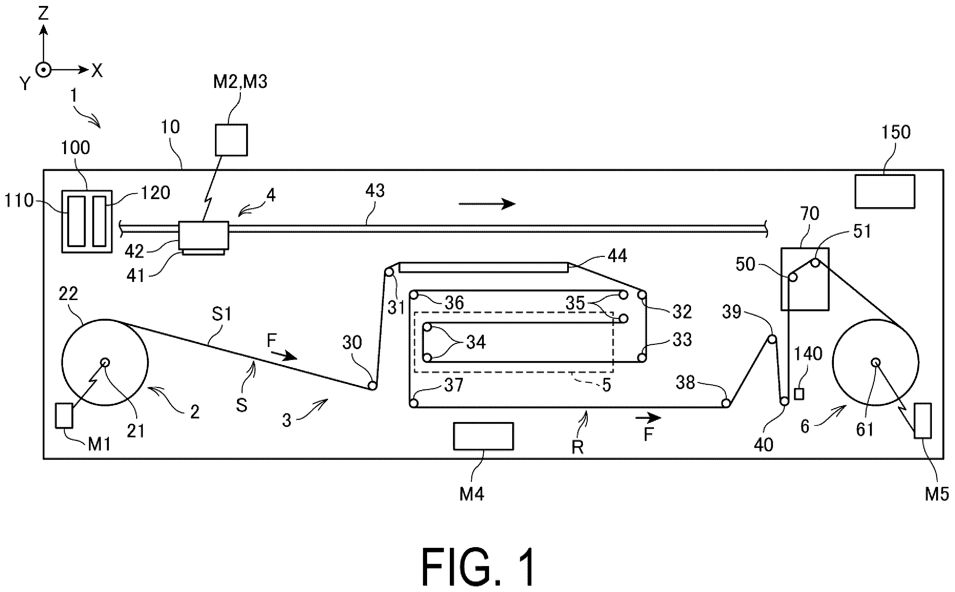

FIG. 1 is a view illustrating a printing device 1 according to an embodiment of the present disclosure.

FIG. 1 illustrates an X axis, a Y axis, and a Z axis. The X axis, the Y axis, and the Z axis are orthogonal to one another. The Z axis indicates an up-down direction and a vertical direction in an installation state of the printing device 1. The X axis and the Y axis are parallel to a horizontal direction. The X axis indicates a front-rear direction of the printing device 1. The Y axis indicates a left-right direction of the printing device 1. The left-right direction of the printing device 1 is a width direction of a print medium S. The positive direction of the Z axis indicates an upward direction. The positive direction of the X axis indicates a rearward direction. The positive direction of the Y axis indicates a rightward direction.

The printing device 1 is an inkjet printer configured to form an image by ejecting ink to the print medium S. As the print medium S used in the printing device 1, various sheets can be used. Examples of the print medium S include paper such as plain paper and high quality paper, as well as a synthetic resin film. For the print medium S, an opaque material such as paper or a transparent material such as a film may be used as a base material.

The print medium S is an example of a "medium".

The printing device 1 includes a medium supply unit 2, a medium conveyance unit 3, a printing unit 4, a drying unit 5, a medium collection unit 6, a scanner 70, a control device 100, and a housing 10 configured to internally house them.

The medium supply unit 2 supplies the print medium S to the printing unit 4. The medium supply unit 2 includes a supply shaft 21 having a cylindrical shape or a columnar shape. The supply shaft 21 rotates by power of a feed motor M1. The supply shaft 21 is mounted with a roll body 22 in which the print medium S is wound in a roll shape, and the print medium S is fed from the roll body 22 by rotation of the supply shaft 21.

The medium conveyance unit 3 conveys, along a conveyance direction F, the print medium S supplied by the medium supply unit 2. The medium conveyance unit 3 includes a plurality of conveyance rollers 30, 31, 32, 33, 34, 35, 36, 37, 38, 39, and 40 configured to come into contact with the print medium S, and constitutes a conveyance path of the print medium S.

The conveyance rollers 30 and 31 convey, toward the printing unit 4, the print medium S fed from the medium supply unit 2.

By ejecting ink toward the print medium S, the printing unit 4 prints an image at a label of the print medium S. The printing unit 4 includes a plurality of ejection heads 41 configured to eject ink, and a carriage 42 configured to hold the ejection heads 41.

The carriage 42 is configured to reciprocate in the X axis direction along a first guide rail 43 installed in the printing device 1 along the X axis direction. The carriage 42 may be formed to be configured to reciprocate in the Y axis direction along a second guide rail installed along the Y axis direction. The carriage 42 is driven by a first carriage motor M2 and a second carriage motor M3, and moves the ejection heads 41 in the X axis direction and the Y axis direction. That is, the printing device 1 of the present embodiment is a lateral type inkjet head printer.

The printing unit 4 executes printing in the width direction of the print medium S by ejecting ink while moving the ejection heads 41 in the Y axis direction. The printing unit 4 moves the ejection heads 41 in the X axis direction with respect to the print medium S by moving the ejection heads 41 in the X axis direction in a state where the print medium S is stopped. Here, the printing unit 4 moves the ejection heads 41 in the Y axis direction to execute printing in the width direction of the print medium S. In this manner, the printing unit 4 performs printing in a region spreading in the X axis direction and the Y axis direction with respect to the print medium S while the medium conveyance unit 3 stops conveyance of the print medium S.

The medium conveyance unit 3 intermittently conveys the print medium S by power of a conveyance motor M4. That is, the medium conveyance unit 3 conveys the print medium S in the conveyance direction F by a predetermined length, and stops the print medium S. Here, the predetermined length is a length in the X axis direction configured to be printed by the printing unit 4 while conveyance of the print medium S is stopped. The printing unit 4 moves the ejection heads 41 in the Y axis direction and the X axis direction to perform printing at a print surface S1 of the print medium S that is stopped. When printing by the printing unit 4 is completed, the medium conveyance unit 3 conveys the print medium S along the X axis direction.

The print surface S1 is an example of a "first surface".

The printing device 1 includes a platen 44 disposed opposite to the printing unit 4. The platen 44 has a rectangular surface disposed to be parallel to an XY plane. The platen 44 supports the print medium S from a side opposite to the printing unit 4. A heater configured to heat the platen 44 is provided below the platen 44. The print medium S is heated during printing or before and after printing, and drying of the ink deposited at the print medium S is promoted.

The print medium S at which an image is printed is conveyed from the printing unit 4 to the drying unit 5 by the conveyance rollers 32, 33, and 34. The drying unit 5 includes, for example, a heater configured to heat the print surface S1 of the print medium S and a heater configured to heat the back surface of the print surface S1. By heating the print medium S, the drying unit 5 dries the ink attached to the print medium S.

The print medium S is conveyed from the drying unit 5 to the medium collection unit 6 by the conveyance rollers 35, 36, 37, 38, 39, and 40. The medium collection unit 6 includes a winding shaft 61 that rotates by power of a winding motor M5. The medium collection unit 6 winds, around the winding shaft 61, and collects the print medium S dried by the drying unit 5.

In this manner, the printing device 1 is provided with a conveyance path R, which is a path at which the print medium S is conveyed along the conveyance direction F.

The conveyance roller 40 is formed to be configured to move along the conveyance direction F. This suppresses excessive tension from being applied to the print medium S.

A position adjacent to the conveyance roller 40 is provided with a detection sensor 140 configured to detect the position of the conveyance roller 40. As the detection sensor 140, various sensors such as a transmission type photosensor, a reflection type photosensor, or a switch type sensor may be used.

In the conveyance path R, the scanner 70 is disposed between the conveyance roller 40 and the medium collection unit 6. The scanner 70 is an example of a reading device configured to read the print surface S1 of the print medium S.

The scanner 70 includes conveyance rollers 50 and 51. By the conveyance rollers 50 and 51, the print medium S is conveyed inside the scanner 70 and sent to the medium collection unit 6.

All of the conveyance rollers 30, 31, 32, 33, 36, 37, 38, 39, 40, 50, and 51 are in contact with one surface of the print medium S and convey, while guiding, the print medium S. However, this is a specific example, and the number and configuration of the conveyance rollers included in the medium conveyance unit 3 can be appropriately changed. For example, the medium conveyance unit 3 may include a plurality of roller pairs configured to nip the print medium S.

The printing device 1 includes an input device 150. The input device 150 is coupled to the control device 100. The input device 150 is a device for a user who operates the printing device 1 to perform various types of input to the printing device 1, and may be various input devices such as a switch, a keyboard, and a mouse. The input device 150 outputs, to the control device 100, information input by the user.

In the present embodiment, the user can input, to the input device 150, the material and color of the print medium S, whether or not the print medium S is transparent, the color of the ink, and the like.

Note that the printing device 1 may be provided with an optical sensor, an image capturing sensor, and the like, and the control device 100 may determine the material and color of the print medium S, whether or not the print medium S is transparent, the color of the ink, and the like based on a signal of the sensor and the like.

The control device 100 is a device configured to function as a control unit configured to control each unit of the printing device 1. The control device 100 includes a processor 110 such as a central processing unit (CPU) or a micro processing unit (MPU), and a memory 120.

The memory 120 is an example of a "storage unit".

By reading and executing a control program 121 stored in the memory 120, the processor 110 controls each unit of the printing device 1. By executing a control program stored in the memory 120, the processor 110 functions as a control unit configured to control each unit of the printing device 1.

The memory 120 stores a control program regarding control of the printing device 1, an image processing program, setting data regarding setting of the printing device 1, and various other data. The memory 120 includes a nonvolatile storage area. The memory 120 may include a volatile storage area and constitute a work area of the processor 110.

By outputting a control signal, the control device 100 operates the ejection heads 41, the first carriage motor M2, the second carriage motor M3, the conveyance motor M4, the feed motor M1, and the winding motor M5. The control device 100 operates the drying unit 5. The conveyance motor M4 drives the medium conveyance unit 3 to rotationally drive at least any of the conveyance rollers 30, 31, 32, 33, 34, 35, 36, 37, 38, 39, and 40.

The control device 100 drives the ejection heads 41 to eject ink toward the print medium S. The control device 100 drives the first carriage motor M2 to move the carriage 42 in the X axis direction. The control device 100 drives the second carriage motor M3 to move the carriage 42 in the Y axis direction. The control device 100 alternately and repeatedly executes main scanning by the first carriage motor M2, the second carriage motor M3, and the ejection heads 41 and sub-scanning by the second carriage motor M3, and intermittently conveys the print medium S and intermittently performs printing at the print medium S.

The control device 100 drives the conveyance motor M4 to move the print medium S in the conveyance direction F. The control device 100 drives the feed motor M1 to rotate the supply shaft 21 to feed the print medium S. The control device 100 drives the winding motor M5 to rotate the winding shaft 61 to wind the print medium S. The control device 100 operates the heater of the drying unit 5 to dry the ink attached to the print medium S.

The control device 100 acquires the type of the print medium S input by the user from the input device 150, and determines the rotation speeds of the conveyance motor M4, the feed motor M1, and the winding motor M5 in accordance with the type of the print medium S.

The control device 100 acquires a detection value of the detection sensor 140 and detects the tension applied to the print medium S. The control device 100 determines the rotational speeds of the conveyance motor M4, the feed motor M1, and the winding motor M5 in accordance with the tension applied to the print medium S.

### Configuration of scanner

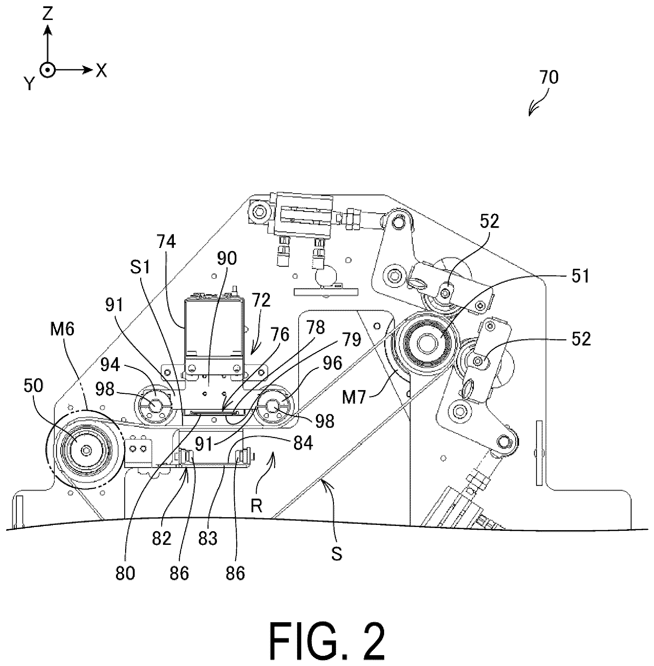

FIG. 2 is a side view of the scanner 70 as viewed from the Y axis direction. FIG. 2 illustrates a drive motor M6 by a two-dot chain line for convenience of description.

As illustrated in FIG. 2, the scanner 70 includes the conveyance rollers 50 and 51. The conveyance roller 50 is disposed upstream of the conveyance roller 51 in the conveyance path R. The conveyance roller 51 is disposed more upward than the conveyance roller 50.

The conveyance roller 50 is provided with the drive motor M6 configured to rotationally drive the conveyance roller 50, and the conveyance roller 51 is provided with a drive motor M7 configured to rotationally drive the conveyance roller 51. Both the drive motors M6 and M7 are rotationally driven under the control of the control device 100. The control device 100 determines the rotation speeds of the drive motors M6 and M7 in accordance with the detection value of the detection sensor 140 and the type of the print medium S.

The scanner 70 is provided with two driven rollers 52. Each of the driven rollers 52 comes into contact with the peripheral surface of the conveyance roller 51. The conveyance roller 51 and each of the driven rollers 52 nip and convey, to the medium collection unit 6, the print medium S.

The conveyance path R is provided, between the conveyance roller 50 and the conveyance roller 51, with a reading unit 72 configured to read an image at the print surface S1. The reading unit 72 includes a reading unit housing 74. The reading unit housing 74 is positioned above the conveyance path R, and the entire lower surface is disposed opposite to the print surface S1 of the print medium S.

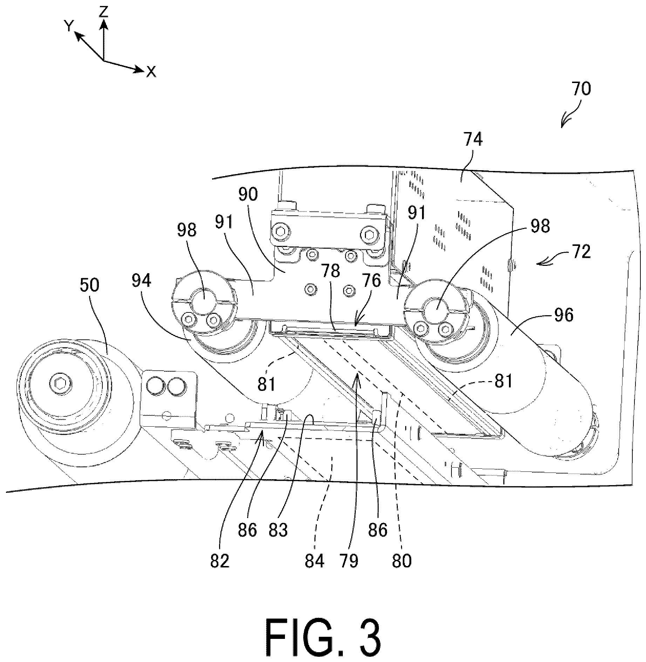

FIG. 3 is a perspective view of the scanner 70.

As illustrated in FIG. 3, the reading unit housing 74 is formed in an elongated cuboid shape extending in the Y axis direction, and has a lower surface disposed substantially parallel to the print surface S1 of the print medium S. The lower surface of the reading unit housing 74 is formed to be entirely open, and fitted with a cover glass 79.

The reading unit housing 74 internally houses an image capturing unit 76.

The image capturing unit 76 includes a substrate 78 mounted with an image capturing element 80. As the image capturing element 80, for example, a charge coupled device (CCD), a contact image sensor (CIS), or the like is used. The image capturing unit 76 may include a mirror configured to reflect incident light and a lens configured to form an image of light at the image capturing element 80.

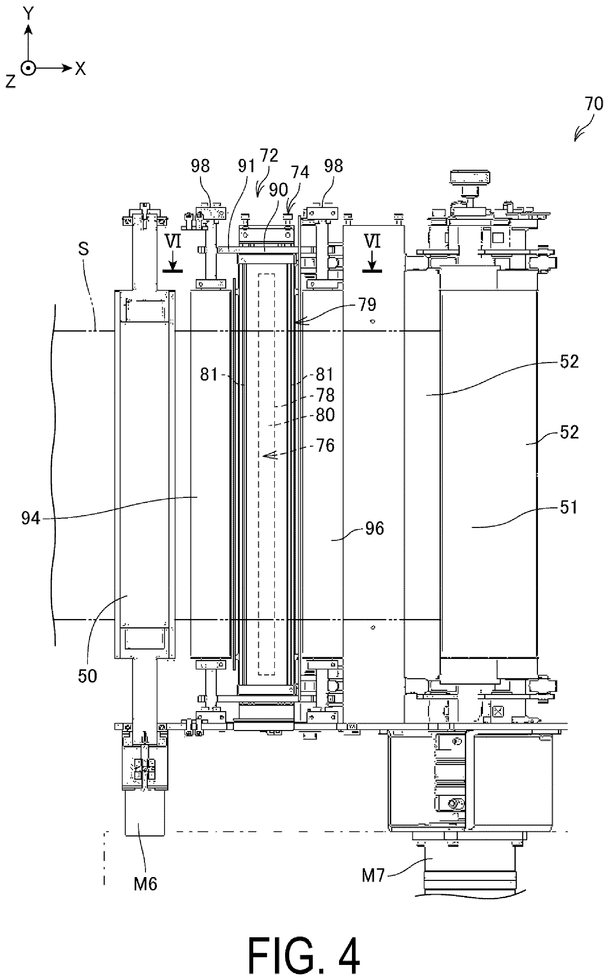

FIG. 4 is a bottom view of the scanner 70. FIG. 4 omits illustration of a placement unit 82, and illustrates the print medium S by a two-dot chain line.

As illustrated in FIG. 4, the image capturing element 80 is formed in an elongated rectangular shape extending in the Y axis direction as viewed from the lower surface side, and is mounted over substantially the entire lower surface of the reading unit housing 74 in the longitudinal direction. The lower surface of the reading unit housing 74 is provided with a pair of image capturing light sources 81. The image capturing light sources 81 are arranged to sandwich the image capturing element 80 along the conveyance direction F. The image capturing light sources 81 are formed in an elongated shape extending in the Y axis direction, and emit light toward the print surface S1 positioned downward from the entire longitudinal direction. Both of the pair of image capturing light sources 81 are covered with the cover glass 79 from below.

As the image capturing light sources 81 of the present embodiment, light emitting elements such as LEDs or semiconductor lasers are used. Note that the present disclosure is not limited to this, and a light source of another form such as a HID lamp may be used as the image capturing light sources 81.

The reading unit 72 exposes the print surface S1 to light emitted from the image capturing light sources 81, and forms, at the image capturing element 80, an image of reflected light reflected from the print surface S1. The image capturing unit 76 detects the luminance and chromaticity of the reflected light formed at the image capturing element 80 under the control of the control device 100, and generates image data based on the image of a document surface. The image capturing unit 76 transmits this image data to the control device 100.

As illustrated in FIGS. 2 and 3, the placement unit 82 is provided at the opposite side of the reading unit 72 across the conveyance path R and the print medium S. The placement unit 82 is positioned below the conveyance path R and is disposed opposite to the surface at the opposite side of the print surface S1 of the print medium S.

The placement unit 82 is provided with an opposite surface 83, which is a flat surface opposite to the surface at the opposite side of the print surface S1 of the print medium S. The opposite surface 83 is formed in an elongated shape extending in the Y axis direction, and is disposed substantially parallel to the surface at the opposite side of the print surface S1 of the print medium S.

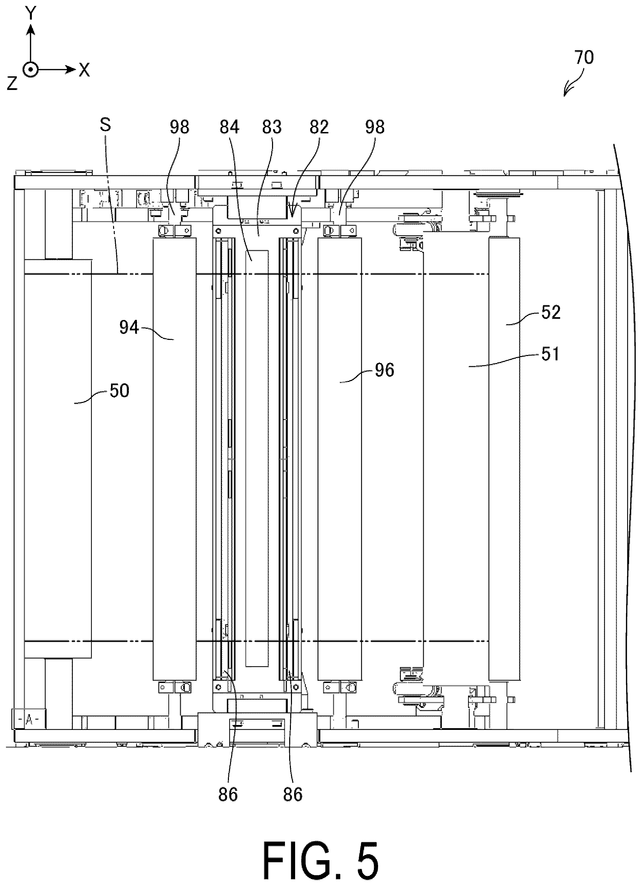

FIG. 5 is a top view of the scanner 70. FIG. 5 omits illustration of the reading unit 72, and illustrates the print medium S by a two-dot chain line.

As illustrated in FIG. 5, a reflector 84, which is an elongated plate-like member, is placed at the placement unit 82. In the reflector 84, one flat surface is formed in white, and the other flat surface is formed in a color other than white, such as black or gray.

When the reflector 84 is placed at the placement unit 82, any one flat surface is disposed opposite to the image capturing element 80 and the surface at the opposite side of the print surface S1 of the print medium S.

The reflector 84 is detachably provided to the placement unit 82. When the base material of the print medium S is transparent and a print portion read by the reading unit 72 is formed with white ink, the user places the reflector 84 at the placement unit 82 such that a surface formed in a color other than white such as black or gray is opposite to the image capturing element 80. When the color of the ink of the print medium S and the print portion read by the reading unit 72 is other than the above condition, the user places the reflector 84 at the placement unit 82 such that the surface formed in white is opposite to the image capturing element 80.

This enables the scanner 70 to read the print portion even when the base material of the print medium S is transparent and a print portion read by the reading unit 72 is formed with white ink. Therefore, the scanner 70 can read an arbitrary print portion of the print medium S even if the print medium S formed with any base material is printed with ink of any color.

Note that there may be two reflectors 84, one of which is formed entirely in white, and the other of which is formed entirely in a color other than white, such as black or gray. In this case, the user may replace the two reflectors 84 according to the base material of the print medium S or the color of the ink. For example, the user may dispose any one of the reflectors 84 overlapping the upper surface of the other reflector 84 according to the base material of the print medium S or the color of the ink.

The placement unit 82 is provided with a pair of reflector light sources 86. The reflector light sources 86 are arranged to sandwich the reflector 84 along the conveyance direction F. Each of the reflector light sources 86 is formed in an elongated shape extending in the Y axis direction, and emits light toward the reflector 84 from the entire longitudinal direction. As the reflector light sources 86 of the present embodiment, light emitting elements such as LEDs or semiconductor lasers are used. Note that the present disclosure is not limited to this, and a light source of another form such as a HID lamp may be used as the reflector light sources 86.

The reflector light sources 86 are turned on and turned off under the control of the control device 100. The control device 100 turns on the reflector light sources 86 when the base material of the print medium S input to the input device 150 is transparent and the print portion read by the reading unit 72 is formed with ink other than white.

When the color of the ink of the print medium S and the print portion read by the reading unit 72 is other than the above condition, the control device 100 turns off the reflector light sources 86.

In the scanner 70, when the base material of the print medium S is transparent and the print portion read by the reading unit 72 is formed with ink other than white, the shadow of the print portion falls on the white reflector 84 by the light emitted from the image capturing light sources 81. In the scanner 70 of the present embodiment, since the reflector light sources 86 irradiate the reflector 84 with light, the shadow is suppressed from falling on the white reflector 84. For this reason, the scanner 70 can suppress the accuracy of reading an arbitrary print portion of the print medium S from decreasing even if the print medium S formed with any base material is printed with ink of any color.

As illustrated in FIGS. 2 and 3, the reading unit housing 74 is attached with a first roller 94 and a second roller 96 via an attachment member 90. The first roller 94 and the second roller 96 are what is called driven rollers in which shaft bodies 98, each of which is a rotation shaft, are not attached with a power source such as a motor.

The attachment member 90 is attached to each of both ends in the longitudinal direction of the reading unit housing 74. The attachment member 90 is provided with arm portions 91 extending outward from both sides of the reading unit housing 74 along the conveyance direction F.

Each of the first roller 94 and the second roller 96 is attached to the reading unit housing 74 by holding both end portions of the shaft bodies 98, each of which is a rotation shaft, by the arm portions 91. One end portion of the shaft body 98 is attached to one of the arm portions 91 of one attachment member 90, and the other end portion of the shaft body 98 is attached to one of the arm portions 91 of the other attachment member 90.

In this manner, both ends of the shaft body 98 are held by each of the arm portions 91 of each of the attachment members 90, whereby the first roller 94 is disposed upstream of the reading unit housing 74 in the conveyance path R. Similarly, the second roller 96 is disposed more downstream than the reading unit housing 74 in the conveyance path R. The longitudinal direction of each of the first roller 94 and the second roller 96 arranged in this manner extends substantially parallel to the Y axis direction, and the lower end portion is disposed more downward than the lower surface of the reading unit housing 74. Each of the first roller 94 and the second roller 96 is disposed at a position of a height substantially identical to one another in the vertical direction.

As illustrated in FIG. 2, in the Z axis direction, the lower end portion of the first roller 94 is positioned more downward than the upper end portion of the conveyance roller 50, and the lower end portion of the second roller 96 is positioned more downward than the upper end portion of the conveyance roller 51.

In other words, the end portion of the conveyance roller 50 at the image capturing element 80 side is positioned closer to the image capturing element 80 side than the end portion of the first roller 94 at the print surface S1 side, and the end portion of the conveyance roller 51 at the image capturing element 80 side is positioned closer to the image capturing element 80 side than the end portion of the second roller 96 at the print surface S1 side.

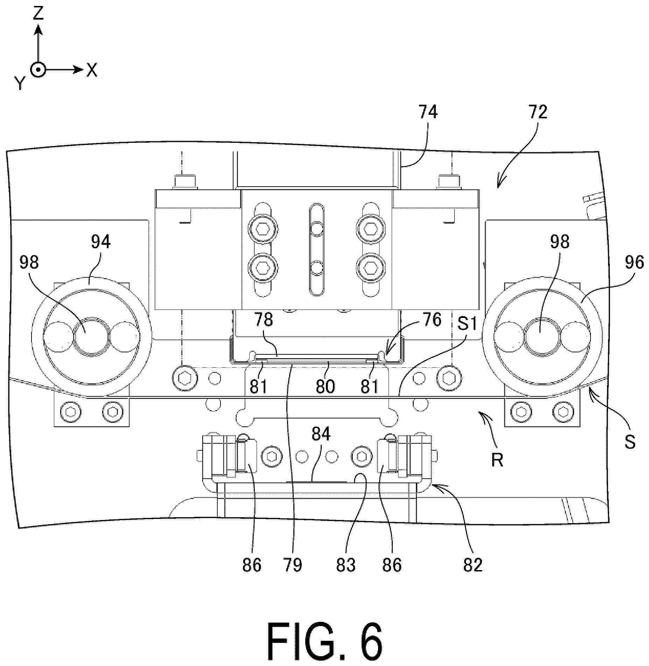

FIG. 6 is a cross-sectional view taken along line VI-VI of FIG. 4.

As illustrated in FIG. 6, the lower end portion of each of the first roller 94 and the second roller 96 is in contact with the print surface S1. Thus, each of the first roller 94 and the second roller 96 applies predetermined tension to the print medium S. Due to this, the print medium S is suppressed from being bent below the reading unit housing 74, and extends substantially linearly as viewed from the Y axis direction. Therefore, the print medium S is disposed substantially parallel to the entire surface of the image capturing element 80 at a position among the first roller 94 and the second roller 96 in the conveyance path R. The scanner 70 reads the print surface S1 of the print medium S in this state by the image capturing element 80.

This enables the scanner 70 to hold the print medium S such that the distance between the image capturing element 80 and the print surface S1 is substantially constant at a position among the first roller 94 and the second roller 96 in the conveyance path R. Therefore, the scanner 70 can suppress a decrease in the reading accuracy of the print surface S1.

In the conveyance path R, the reading unit 72 and the placement unit 82 do not come into contact with the print medium S at least in a range read by the image capturing element 80. In this range, the first roller 94 and the second roller 96 come into contact with the print medium S. This reduces a frictional load applied to the print medium S to be conveyed, at least in the range read by the image capturing element 80 in the conveyance path R.

Furthermore, in this range, the print medium S is held by the first roller 94 and the second roller 96 coming into contact with the print medium S from the side where the image capturing element 80 is disposed.

This enables the scanner 70 to hold the print medium S such that the distance between the image capturing element 80 and the print surface S1 is substantially constant regardless of the thickness dimension of the print medium S.

As described above, the first roller 94 and the second roller 96 are provided integrally with the reading unit housing 74 via the attachment member 90. This enables the scanner 70 to hold the print medium S such that the distance between the image capturing element 80 and the print surface S1 is substantially constant even in a case where vibration accompanying conveyance of the print medium S occurs.

### Operation of scanner

In the printing device 1, when the base material of the print medium S is opaque and a print portion read by the reading unit 72 is formed with ink other than white, the user places the reflector 84 at the placement unit 82 such that a surface formed in white is opposite to the image capturing element 80. In this case, the control device 100 turns off the reflector light sources 86.

When the base material of the print medium S is opaque and a print portion read by the reading unit 72 is formed with white ink, the user places the reflector 84 at the placement unit 82 such that a surface formed in white is opposite to the image capturing element 80. In this case, the control device 100 turns off the reflector light sources 86.

When the base material of the print medium S is transparent and the print portion read by the reading unit 72 is formed with ink other than white, the user places the reflectors 84 at the placement unit 82 such that a surface formed in white is opposite to the image capturing element 80. In this case, the control device 100 turns on the reflector light sources 86.

When the base material of the print medium S is transparent and a print portion read by the reading unit 72 is formed with white ink, the user places the reflector 84 at the placement unit 82 such that a surface formed with a color other than white is opposite to the image capturing element 80. In this case, the control device 100 turns off the reflector light sources 86.

In this manner, by switching turning on of the reflection surface of the reflector 84 and the reflector light sources 86 according to the base material of the print medium S and the color of the ink of the print portion read by the reading unit 72, the scanner 70 can read an arbitrary print portion of various print media S.

The above-described embodiment exemplifies one aspect of the present disclosure, and can be arbitrarily modified and applied without departing from the gist of the present disclosure.

In the above-described embodiment, the color of the reflection surface of the reflector 84 is switched by the user's operation. However, the disclosure is not limited to this, and the scanner 70 may be provided with a switching mechanism whose operation is controlled by the control device 100, and the color of the reflection surface of the reflector 84 may be changed by the switching mechanism.

In the above-described embodiment, a lateral type inkjet method is exemplified as a printing method of the printing device 1, but the printing method of the printing device 1 may be a line type inkjet method or a serial type inkjet method. The printing method of the printing device 1 is not limited to the inkjet method, and may be another printing method such as an electrophotographic method using toner.

The processor 110 may include a plurality of processors or may include a single processor. The processor 110 may be hardware programmed to implement a function of each unit described later. That is, the processor 110 may include, for example, an application specific integrated circuit (ASIC) or a field programmable gate array (FPGA).

Each unit illustrated in FIG. 1 is an example, and a specific implementation form is not particularly limited. That is, it is not always necessary to implement hardware individually corresponding to each unit, and it is of course possible to adopt a configuration in which the function of each unit is implemented by one processor executing programs. Some of functions implemented by software in the above-described embodiment may be implemented by hardware, or some of functions implemented by hardware may be implemented by software. In addition, specific detailed configurations of each of other units of the control device 100 and the printing device 1 can also be arbitrarily changed in a range not departing from the gist of the present disclosure.

The directions such as horizontal and vertical directions and various shapes in the above-described embodiment include what is called an equivalent range in which the same actions and effects as those in the directions, numerical values, and shapes are achieved unless otherwise specified.

### Overview of Present Disclosure

An overview of the present disclosure is provided below as the appendices.

### Appendix 1

A reading device including an image capturing element configured to capture a medium conveyed, a first roller disposed upstream of the image capturing element in a conveyance direction of the medium, and a second roller disposed downstream of the image capturing element in the conveyance direction, in which the image capturing element is disposed away from the medium and opposite to a first surface that is one surface of the medium, and the first roller and the second roller come into contact with the first surface of the medium from a side of the image capturing element to apply the medium with predetermined tension along the conveyance direction of the medium.

This enables the reading device to hold the print medium such that the distance between the image capturing element and the first surface is substantially constant regardless of the thickness dimension of the medium, and to suppress an increase in the conveyance load applied to the medium.

### Appendix 2

The reading device according to Appendix 1, further including an image capturing light source disposed opposite to the first surface and configured to irradiate the first surface with light, in which a reflector, and a reflector light source configured to irradiate the reflector with light are provided on an opposite side of the image capturing element across the medium is provided.

This enables the reading device to suppress the shadow from falling on the reflector and to suppress the accuracy of reading an arbitrary portion of the medium from decreasing.

### Appendix 3

The reading device according to Appendix 2, in which when the medium is a print medium at which a predetermined image is printed with ink other than white at a transparent base material, the reflector is opposite to the image capturing element, and a portion overlapping a range captured by the image capturing element is formed in white, and the image capturing element captures the first surface in a state where the reflector light source is turned on.

This enables the reading device to suppress the shadow of a portion printed with ink other than white from falling on the reflector and to suppress the accuracy of reading an arbitrary portion of the medium from decreasing.

### Appendix 4

The reading device according to Appendix 2 or 3, in which when the medium is a print medium at which a predetermined image is printed with ink in white at a transparent base material,
the reflector is opposite to the image capturing element, and a portion overlapping a range captured by the image capturing element is formed in a color other than white, and
the image capturing element captures the first surface in a state where the reflector light source is turned off.

This enables the reading device to read portion printed with ink of white.

### Appendix 5

The reading device according to any one of Appendices 2 to 4, in which when the medium is a print medium at which a predetermined image is printed with various types of ink at an opaque base material, the image capturing element captures the first surface in a state where the reflector light source is turned off.

This enables the reading device to turn off the reflector light source when the shadow does not fall on the reflector.

### Appendix 6

The reading device according to any one of Appendices 2 to 5, in which the reflector is provided opposite to the image capturing element and configured to change, to any of white and a color other than white, a portion overlapping a range captured by the image capturing element.

This enables the reading device to read an arbitrary print portion of various media.

### Appendix 7

A printing device including the reading device according to any one of Appendices 1 to 6, a conveyance unit configured to convey the medium having an elongated shape, and a printing unit provided upstream of the reading device in a conveyance path of the medium, and configured to form an image by ejecting ink to the first surface that is one surface of the medium conveyed by the conveyance unit.

Due to this, the printing device achieves effects similar to those of the reading device described above.

## Claims

1. A reading device comprising:
an image capturing element configured to capture a medium conveyed;
a first roller disposed upstream of the image capturing element in a conveyance direction of the medium; and
a second roller disposed downstream of the image capturing element in the conveyance direction; wherein
the image capturing element is disposed away from the medium and opposite to a first surface that is one surface of the medium, and
the first roller and the second roller come into contact with the first surface of the medium from a side of the image capturing element to apply the medium with predetermined tension along the conveyance direction of the medium.

2. The reading device according to claim 1, further comprising
an image capturing light source disposed opposite to the first surface and configured to irradiate the first surface with light, wherein
a reflector, and
a reflector light source configured to irradiate the reflector with light, are provided on an opposite side of the image capturing element across the medium.

3. The reading device according to claim 2, wherein
when the medium is a print medium obtained by printing a predetermined image with ink that is not white on a transparent base material,
the reflector is opposite to the image capturing element, and a portion overlapping a range captured by the image capturing element is formed in white, and
the image capturing element captures the first surface in a state where the reflector light source is turned on.

4. The reading device according to claim 2, wherein
when the medium is a print medium obtained by printing a predetermined image with white ink on a transparent base material,
the reflector is opposite to the image capturing element, and a portion overlapping a range captured by the image capturing element is formed in a color other than white, and
the image capturing element captures the first surface in a state where the reflector light source is turned off.

5. The reading device according to claim 2, wherein
when the medium is a print medium at which a predetermined image is printed with various types of ink on an opaque base material,
the image capturing element captures the first surface in a state where the reflector light source is turned off.

6. The reading device according to claim 2, wherein
the reflector is provided opposite to the image capturing element and configured to change, to any of white and a color other than white, a portion overlapping a range captured by the image capturing element.

7. A printing device comprising:
the reading device according to claim 1;
a conveyance unit configured to convey the medium having an elongated shape; and
a printing unit provided upstream of the reading device in a conveyance path of the medium, and configured to form an image by ejecting ink to the first surface that is one surface of the medium conveyed by the conveyance unit.
